# EUROPEAN PATENT APPLICATION

(11) **EP 0 969 461 A2**
(43) Date of publication of application: **05.01.2000**
(21) Application number: 99111987.6
(22) Date of filing: 29.06.1999
(51) Int. Cl.: G11B 20/00

(54) **Enciphering apparatus, information recording apparatus and record medium**

(30) Priority: 30.06.1998 JP 18534998
(71) Applicant: PIONEER ELECTRONIC CORPORATION, Meguro-ku Tokyo-to (JP)
(72) Inventor: Hosaka, Sumio, Pioneer Electronic Corporation, Tokorozawa-shi, Saitama-ken (JP); Yoshida, Kazuyuki, Pioneer Electronic Corporation, Tsurugashima-shi, Saitama-ken (JP)
(74) Representative: Reinhard - Skuhra - Weise & Partner

(57) **Abstract**

An enciphering apparatus (2) generates enciphered certification information, which is to be recorded on a record medium (DK) together with record information, by enciphering certification information indicating that the record information is not illegally copied. The enciphering apparatus is provided with a generating device (22, 23, 24, 25) for generating the enciphered certification information by changing values of all of information units constituting the certification information by use of an encipher key set in advance. The enciphering apparatus is further provided with: a data enciphering device (20) for enciphering the record information by use of the encipher key. The enciphered certification information is superimposed onto the enciphered record information and is recorded onto the record medium.

## Description

### BACKGROUND OF THE INVENTION

### 1. Field of the Invention

The present invention generally relates to an apparatus for enciphering and generating certification information to prevent the certification information, which is recorded on a record medium together with record information, from being leaked to the external, in order to prevent an illegal copy of the record information etc., and also relates to an information recording apparatus including such an enciphering apparatus, and a record medium on which the enciphered certification information is recorded.

### 2. Description of the Related Art

Video information, audio information and the like which are recorded on a record medium represented by an optical disc such as a CD (Compact Disc), a DVD etc., are generally protected by a copy right law. It is basically prohibited to copy the information without any permission.

On the other hand, it is necessary for a copyright holder to take a measure of effectively preventing such an illegal copy.

There is a method of enciphering certification information, which indicates that the video information etc., to be recorded is not illegally copied when recording the video information etc., onto the record medium, and recording the enciphered certification information together with the video information etc., on the record medium.

Namely, by recording the enciphered certification information together with the video information etc., and constructing a reproducing apparatus which is not illegal but legal so as to decipher the enciphered certification information before reproducing the video information etc., and so as to be capable of reproducing the video information etc., from the record medium only when the certification information is detected, it is possible to prevent another reproducing apparatus, which is not constructed in this manner (i.e., an illegal reproducing apparatus), from reproducing the legal video information etc., and further illegally copying this since the enciphered certification information cannot be reproduced by this illegal reproducing apparatus.

On the other hand, it is required to strictly manage the certification information so that the content of the certification information cannot be deciphered by an illegal recording apparatus or an illegal reproducing apparatus.

This is because, if the certification information is deciphered by an illegal recording apparatus or an illegal reproducing apparatus and if the video information etc., is recorded onto the illegally copied record medium while the deciphered certification information is forged, this illegal record medium is recognized as if it would include the video information etc., and would have been manufactured legally, so that a so-called pirated edition of the video information etc., is distributed as a legal copy.

However, according to the above mentioned method of enciphering the certification information, only one portion of each information unit (e.g., each byte) constituting the certification information is enciphered at first and is then recorded together with the video information.

Therefore, in case of the certification information only one portion of which is enciphered, it is possible to analyze which portion of the certification information is enciphered and which portion of the certification information is not enciphered by obtaining and comparing a plurality of certification informations which have been enciphered by the same method with each other. Further, it may be possible to identify the enciphering method as the enciphered portion is identified. As a result, there may be a case that the certification information is illegally deciphered.

### SUMMARY OF THE INVENTION

It is therefore an object of the present invention to provide: an enciphering apparatus, which can prevent the certification information from being distributed together with the illegally copied video information etc., since the enciphered certification information is illegally deciphered and is leaked to the external; an information recording apparatus including the enciphering apparatus; and a record medium on which the certification information enciphered by the enciphering apparatus is recorded.

The above object of the present invention can be achieved by an enciphering apparatus for generating enciphered certification information, which is to be recorded on a record medium together with record information, by enciphering certification information indicating that the record information is not illegally copied, wherein the enciphering apparatus is provided with a generating device for generating the enciphered certification information by changing values of all of information units constituting the certification information by use of an encipher key set in advance.

According to the enciphering apparatus, since the values of all of the information units constituting the enciphered certification information are changed, even if the enciphered certification information is leaked to the external, it is possible to prevent the content of the enciphered certification information from being recognized.

Therefore, it is possible to prevent the certification information from being leaked and distributed with the illegally copied information.

In one aspect of the enciphering apparatus of the present invention, the generating device is provided with: a changing device for respectively changing (i) the values of a plurality of kinds of parameters, which are different from the encipher key and indicate as at least one portion of the certification information that the record information is not illegally copied, and (ii) the value of the encipher key, to thereby generate a plurality of kinds of changed parameters and changed encipher key; and a combining device for combining the changed parameters and the changed encipher key, to thereby generate the enciphered certification information.

According to this aspect, since the enciphered certification information is generated by combining the changed encipher key and the changed parameters, it is possible to more effectively prevent the leaked enciphered certification information from being recognized.

In this aspect, the combining device may be provided with a rearranging device for mutually mixing and rearranging information units constituting the changed encipher key and information units constituting the changed parameters, to thereby generate the enciphered certification information.

By constructing in this manner, since the enciphered certification information is generated by mutually mixing and rearranging the information units, it is possible to prevent even more effectively the leaked enciphered certification information from being recognized.

In another aspect of the enciphering apparatus of the present invention, the apparatus is further provided with a key generator for randomly generating the encipher key.

According to this aspect, since the encipher key is randomly generated, it is possible to make the recognition of the enciphered certification information more difficult.

In this aspect, the generating device and the key generator may be packaged in one package.

By constructing in this manner, it is possible to prevent a signal, which is transmitted and received between the generating device and the key generator, from being leaked to the external.

Therefore, it is possible to prevent the leakage of the certification information by monitoring each signal.

In another aspect of the enciphering apparatus of the present invention, the apparatus is further provided with a data enciphering device for enciphering the record information by use of the encipher key.

According to this aspect, since the record information as well as the certification information is enciphered, it is possible to make the illegal copying process more difficult.

In this aspect, the apparatus may be further provided with a key generator for randomly generating the encipher key, wherein the data enciphering device, the generating device and the key generator are packaged in one package.

By constructing in this manner, since the encipher key is randomly generated, it is possible to make the illegal copying process more difficult. Further, it is possible to prevent a signal, which is transmitted and received between the data enciphering device, the generating device and the key generator, from being leaked to the external.

The above object of the present invention can be also achieve by an information recording apparatus for recording record information onto a record medium. The information recording apparatus is provided with an enciphering apparatus for generating enciphered certification information, which is to be recorded on the record medium together with the record information, by enciphering certification information indicating that the record information is not illegally copied, wherein the enciphering apparatus is provided with (i) a generating device for generating the enciphered certification information by changing values of all of information units constituting the certification information by use of an encipher key set in advance, and (ii) a data enciphering device for enciphering the record information by use of the encipher key. The information recording apparatus is further provided with: a superimposing device for superimposing the enciphered certification information onto the enciphered record information to thereby generate superimposed information; and a recording device for recording the superimposed information onto the record medium.

According to the information recording apparatus of the present invention, the enciphered certification information is generated by the generating device in the enciphering apparatus, by changing the values of all of the information units constituting the certification information by use of the encipher key. On the other hand, the record information is enciphered by the data enciphering device in the enciphering apparatus, by use of the encipher key. Then, the enciphered certification information is superimposed by the superimposing device onto the enciphered record information. Finally, the superimposed information is recorded onto the record medium by the recording device.

Thus, since the values of all of the information units constituting the enciphered certification information are changed, even if the enciphered certification information is leaked to the external, it is possible to prevent the content of the enciphered certification information from being recognized.

Therefore, it is possible to prevent the certification information from being leaked and distributed with the illegally copied information.

In one aspect of the information recording apparatus of the present invention, the enciphering apparatus is further provided with a key generator for randomly generating the encipher key.

According to this aspect, since the encipher key is randomly generated, it is possible to make the recognition of the enciphered certification information more difficult.

In another aspect of the information recording apparatus of the present invention, the apparatus is further provided with a parameter generator for generating a plurality of kinds of parameters, which are different from the encipher key and indicate as at least one portion of the certification information that the record information is not illegally copied.

According to this aspect, the parameters indicating that the record information is not illegally copied are generated by the parameter generator. Then, these generated parameters are enciphered by the generating device. Thus, it is possible to effectively prevent the leaked enciphered certification information from being recognized.

The above object of the present invention can be also achieved by a record medium on which record information and enciphered certification information, which is generated by enciphering certification information indicating that the record information is not illegally copied, are recorded, wherein the enciphered certification information is generated by changing values of all of information units constituting the certification information by use of an encipher key set in advance.

According to the record medium, since the values of all of the information units constituting the enciphered certification information are changed, even if the enciphered certification information is leaked to the external, it is possible to prevent the content of the enciphered certification information from being recognized.

Therefore, it is possible to prevent the certification information from being leaked and distributed with the illegally copied information.

In one aspect of the record medium of the present invention, the enciphered certification information is generated by respectively changing and then combining together (i) the values of a plurality of kinds of parameters, which are different from the encipher key and indicate as at least one portion of the certification information that the record information is not illegally copied, and (ii) the value of the encipher key.

According to this aspect, since the enciphered certification information is generated by combining the changed encipher key and the changed parameters, it is possible to more effectively prevent the leaked enciphered certification information from being recognized.

In this aspect, the enciphered certification information may be generated by mutually mixing and rearranging information units constituting the changed encipher key and information units constituting the changed parameters.

By constructing in this manner, since the enciphered certification information is generated by mutually mixing and rearranging the information units, it is possible to prevent even more effectively the leaked enciphered certification information from being recognized.

In another aspect of the record medium of the present invention, the encipher key is randomly generated.

According to this aspect, since the encipher key is randomly generated, it is possible to make the recognition of the enciphered certification information more difficult.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing a schematic construction of an information recording apparatus as an embodiment of the present invention; and
FIG. 2 is a diagram showing a generation of certification information in the embodiment.

### DETAILED DESCRIPTION OF THE PREFERRED EMBODIMENTS

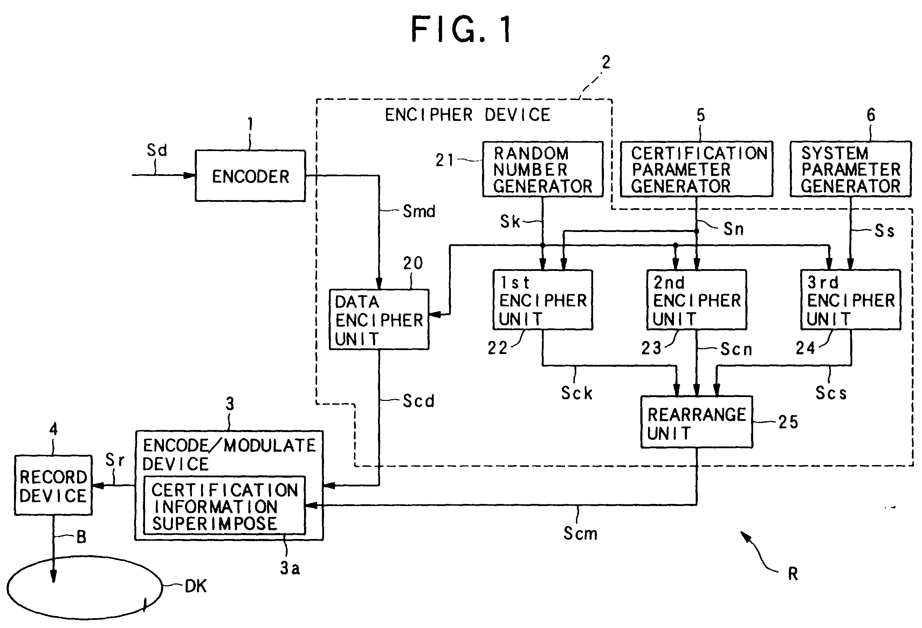

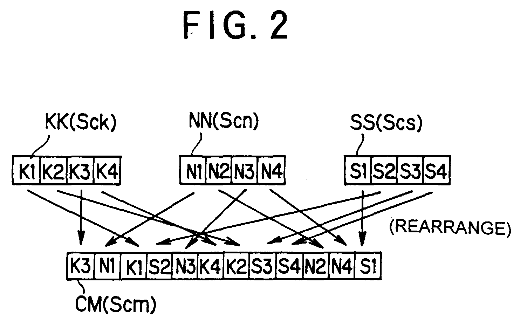

Referring to the accompanying drawings of FIG. 1 and FIG. 2, an embodiment of the present invention will be now explained.

In the embodiment explained below, the present invention is applied to an information recording apparatus for recording record information onto an optical disc as a record medium, which includes an enciphering apparatus for enciphering the record information to be recorded by use of an encipher key and also enciphering the certification information to be recorded.

FIG. 1 is a block diagram showing a schematic construction of an information recording apparatus as the embodiment. FIG. 2 is a diagram showing an operation of an enciphering apparatus included in the information recording apparatus.

As shown in FIG. 1, an information recording apparatus R is provided with an encoder 1, an encipher device 2, an encode/modulate device 3, a record device 4, a certification parameter generator 5 and a system parameter generator 6.

The encipher device 2 is provided with a data encipher unit 20, a random number generator 21, a 1^{st} encipher unit 22, a 2^{nd} encipher unit 23, a 3^{rd} encipher unit 24 and a rearrange unit 25.

The encode/modulate device 3 has a certification information superimpose device 3a.

Here, the data encipher unit 20, the random number generator 21, the 1^{st} encipher unit 22, the 2^{nd} encipher unit 23, the 3^{rd} encipher unit 24 and the rearrange unit 25 among the above mentioned constitutional elements are sealed in one semiconductor package made from plastic resin or the like.

Next, the operation is explained with reference to FIG. 1 and FIG. 2.

When a record information signal Sd including record information to be recorded onto an optical disc DK is inputted from the external, the encoder 1 encodes the record information and generates an encoded information signal Smd to thereby output it to the data encipher unit 20.

On the other hand, the random number generator 21 randomly generates an encipher key to encipher the record information, which is encoded and is included in the encoded information signal Smd, and generates a key signal Sk including the encipher key to thereby output it to the data encipher unit 20, the 1^{st} encipher unit 22, the 2^{nd} encipher unit 23 and the 3^{rd} encipher unit 24.

By this, the data encipher unit 20 enciphers the record information which is encoded, by an enciphering function which is set in advance, by use of the encipher key included in the encipher signal Sk, and generates the enciphered record information signal Scd including the enciphered record information to thereby output it to the encode/demodulate device 3.

On the other hand, the certification parameter generator 5 generates a parameter signal Sn including a certification parameter which is set in advance, to thereby output it to the 1^{st} encipher unit 22 and the 2^{nd} encipher unit 23.

Here, the certification parameter is a parameter to judge whether or not a reproducing apparatus is legally certified when reproducing the optical disc DK on which the record information enciphered by the information recording apparatus R in the present embodiment is recorded.

Namely, as described later, the certification parameter is enciphered by use of the encipher key. Then, the enciphered certification parameter and the certification parameter itself are recorded on the optical disc DK. Then, the enciphered certification parameter is deciphered by the reproducing apparatus by use of the encipher key. Then, if the certification parameter outputted as a result and the original certification parameter recorded on the optical disc DK are coincident to each other, it is possible to confirm that the reproducing apparatus is legally certified in advance.

On the other hand, the system parameter generator 6 generates a parameter signal Ss including a system parameter which is set in advance, to thereby output it to the 3^{rd} encipher unit 24.

Here, as the system parameter, a parameter indicating that the record information recorded on the optical disc DK is legal (i.e., not-illegally copied), a parameter indicating the permission and prohibition of copying the record information after being recorded on the optical disc DK, alternatively, the identification information for identifying the enciphering method in the data encipher unit 20, a parameter indicating the type of the optical disc DK itself, and so on can be employed for example.

Namely, as described later, the system parameter is enciphered by use of the encipher key and the enciphered system parameter is recorded onto the optical disc DK. Then, in the reproducing apparatus, the original system parameter is obtained by deciphering the enciphered system parameter by use of the encipher key, so that it is used for identifying the enciphering method, judging whether the record information is illegally-copied or not, controlling the copying operation again or the like.

Next, the 1^{st} encipher unit 22 enciphers the values of all bytes constituting the encipher key, which is included in the key signal Sk, by use of the certification parameter which is included in the parameter signal Sn, and generates an enciphered key signal Sck including the encipher key which is enciphered, to thereby output it to the rearrange unit 25.

On the other hand, the 2^{nd} encipher unit 23 enciphers the values of all of the bytes constituting the certification parameter included in the parameter signal Sn by use of the encipher key included in the key signal Sk as above method, and generates the enciphered parameter signal Scn including the enciphered certification parameter, to thereby output it to the rearrange unit 25.

Further, the 3^{rd} encipher unit 24 enciphers the values of all of the bytes constituting the system parameter included in the parameter signal Ss by use of the encipher key included in the key signal Sk as above method, and generates the enciphered parameter signal Scs including the enciphered system parameter, to thereby output it to the rearrange unit 25.

At this time, it is preferable to use an enciphering function used for the enciphering operation in the 1^{st} encipher unit 22, an enciphering function used for the enciphering operation in the 2^{nd} encipher unit 23 and an enciphering function used for the enciphering operation in the 3^{rd} encipher unit 24, which are different from each other.

By the operation in each of the encipher units as mentioned above, it is possible to obtain the encipher key, the certification parameter and the system parameter, in each of which all of the values of the bytes are changed by the encipherment.

Then, the rearranging unit 25 mixes together all of the bytes constituting the encipher key which is enciphered and is included in the enciphered key signal Sck, all of the bytes constituting the certification parameter which is enciphered and is included in the enciphered parameter signal Scn and all of the bytes constituting the system parameter which is enciphered and included in the enciphered parameter signal Scs, and rearranges them by the order which is randomly set in advance, to thereby generate the certification information signal Scm including the enciphered certification information to be recorded onto the optical disc DK and output it to the certification information superimpose device 3a within the encode/modulate device 3.

Here, the operation of the rearrange unit 25 is explained more concretely with reference to FIG. 2.

As shown in FIG. 2, it is assumed that the enciphered key KK of 4 bytes, in which all of the values of the bytes are enciphered and which have the values "K1" to "K4" respectively, is included in the enciphered key signal Sck.

It is also assumed that the enciphered certification parameter NN of 4 bytes, in which all of the values of the bytes are enciphered and which have the values "N1" to "N4" respectively, is included in the enciphered parameter signal Scn.

It is further assumed that the enciphered system parameter SS of 4 bytes, in which all of the values of the bytes are enciphered and which have the values "S1" to "S4" respectively, is included in the enciphered parameter signal Scs.

At this time, the rearrange unit 25 generates the enciphered certification information CM by randomly rearranging the value of each byte constituting the enciphered key KK, the enciphered certification parameter NN and the enciphered system parameter SS as shown in FIG. 2, to thereby output it as the certification information signal Scm to the certification information superimpose device 3a.

Then, the certification information superimpose device 3a superimposes the certification information, which is included in the certification information signal Scm, onto the enciphered record information which is included in the enciphered record information signal Scd.

After that, the encode/modulate device 3 modulates the enciphered record information on which the certification information is superimposed, and generates the record signal Sr to thereby output it to the record device 4.

Then, the record device 4 intensity-modulates the light beam B for recording, which is emitted from the semiconductor laser diode not illustrated, by the record signal Sr, and records onto the optical disc DK the above mentioned enciphered record information and the enciphered certification information by forming the information pit in the shape corresponding to the change of the intensity of the light beam B.

After that, as the reproducing apparatus which is legally certified reproduces the information recorded on the optical disc DK, the enciphered certification information is deciphered and is used for the recognition of the enciphering method, controlling the copy and so on.

As explained above, according to the operation of the encipher unit 2 in the information recording apparatus R of the present embodiment, since the values of all of the bytes constituting the enciphered certification information CM are changed, it is possible to prevent the content of the enciphered certification information CM from being deciphered even if the enciphered certification information CM is leaked to the external.

Further, since the certification information CM is generated by changing the values of the encipher key, the value of the certification parameter and the value of the system parameter respectively and then combining the enciphered key KK, the enciphered certification parameter NN and the enciphered system parameter SS, it is possible to effectively prevent the leaked certification information CM from being deciphered.

Furthermore, since the certification information CM is generated by mixing and rearranging each byte constituting the enciphered key KK, each byte constituting the enciphered certification parameter NN and each byte constituting the enciphered system parameter SS, it is possible to more effectively prevent the leaked certification information CM from being deciphered.

Since the encipher key is randomly generated, it is possible to make the deciphering the certification information CM more difficult.

Furthermore, since the data encipher unit 20, the random number generator 21, the 1^{st} encipher unit 22, the 2^{nd} encipher unit 23, the 3^{rd} encipher unit 24 and the rearrange unit 25 are packaged in a semiconductor package composed of one piece of plastic resin etc., it is possible to prevent the signal which is transmitted and received between these circuits from being leaked to the external.

Incidentally, although in the above mentioned embodiment, the case of superimposing the certification information N included in the certification information signal Scm onto the enciphered record information included in the enciphered record information signal Scd has been explained, it may be constructed such that the certification information N is superimposed on the record information which does not especially require any encipherment (e.g., information other than the video information or audio information as main information, such as control information etc.,).

An enciphering apparatus (2) generates enciphered certification information, which is to be recorded on a record medium (DK) together with record information, by enciphering certification information indicating that the record information is not illegally copied. The enciphering apparatus is provided with a generating device (22, 23, 24, 25) for generating the enciphered certification information by changing values of all of information units constituting the certification information by use of an encipher key set in advance. The enciphering apparatus is further provided with: a data enciphering device (20) for enciphering the record information by use of the encipher key. The enciphered certification information is superimposed onto the enciphered record information and is recorded onto the record medium.

## Claims

1. An enciphering apparatus (2) for generating enciphered certification information, which is to be recorded on a record medium (DK) together with record information, by enciphering certification information indicating that the record information is not illegally copied,
characterized in that said enciphering apparatus comprises a generating device (22, 23, 24, 25) for generating the enciphered certification information by changing values of all of information units constituting the certification information by use of an encipher key set in advance.

2. An enciphering apparatus (2) according to Claim 1, characterized in that said generating device (22, 23, 24, 25) comprises:
a changing device (22, 23, 24) for respectively changing (i) the values of a plurality of kinds of parameters, which are different from the encipher key and indicate as at least one portion of the certification information that the record information is not illegally copied, and (ii) the value of the encipher key, to thereby generate a plurality of kinds of changed parameters and changed encipher key; and
a combining device (25) for combining the changed parameters and the changed encipher key, to thereby generate the enciphered certification information.

3. An enciphering apparatus (2) according to Claim 2, characterized in that said combining device (25) comprises a rearranging device for mutually mixing and rearranging information units constituting the changed encipher key and information units constituting the changed parameters, to thereby generate the enciphered certification information.

4. An enciphering apparatus (2) according to any one of Claims 1 to 3, characterized in that said apparatus further comprises a key generator (21) for randomly generating the encipher key.

5. An enciphering apparatus (2) according to Claim 4. characterized in that said generating device (22, 23, 24, 25) and said key generator (21) are packaged in one package.

6. An enciphering apparatus (2) according to any one of Claims 1 to 5, characterized in that said apparatus further comprises a data enciphering device (20) for enciphering the record information by use of the encipher key.

7. An enciphering apparatus (2) according to Claim 6, characterized in that
said apparatus further comprises a key generator (21) for randomly generating the encipher key, and
said data enciphering device (20), said generating device (22, 23, 24, 25) and said key generator (21) are packaged in one package.

8. An information recording apparatus (R) for recording record information onto a record medium (DK), characterized in that said apparatus comprises:
an enciphering apparatus (2) for generating enciphered certification information, which is to be recorded on the record medium together with the record information, by enciphering certification information indicating that the record information is not illegally copied, wherein said enciphering apparatus comprises (i) a generating device (22, 23, 24, 25) for generating the enciphered certification information by changing values of all of information units constituting the certification information by use of an encipher key set in advance, and (ii) a data enciphering device (20) for enciphering the record information by use of the encipher key;
a superimposing device (3) for superimposing the enciphered certification information onto the enciphered record information to thereby generate superimposed information; and
a recording device (4) for recording the superimposed information onto the record medium.

9. An information recording apparatus (R) according to Claim 8, characterized in that said enciphering apparatus (2) further comprises a key generator (21) for randomly generating the encipher key.

10. An information recording apparatus (R) according to Claim 8 or 9, characterized in that said apparatus further comprises a parameter generator (5, 6) for generating a plurality of kinds of parameters, which are different from the encipher key and indicate as at least one portion of the certification information that the record information is not illegally copied.

11. A record medium (DK) on which record information and enciphered certification information, which is generated by enciphering certification information indicating that the record information is not illegally copied, are recorded,
characterized in that the enciphered certification information is generated by changing values of all of information units constituting the certification information by use of an encipher key set in advance.

12. A record medium (DK) according to Claim 11, characterized in that the enciphered certification information is generated by respectively changing and then combining together (i) the values of a plurality of kinds of parameters, which are different from the encipher key and indicate as at least one portion of the certification information that the record information is not illegally copied, and (ii) the value of the encipher key.

13. A record medium (DK) according to Claim 12, characterized in that the enciphered certification information is generated by mutually mixing and rearranging information units constituting the changed encipher key and information units constituting the changed parameters.

14. A record medium (DK) according to any one of Claims 11 to 13, characterized in that the encipher key is randomly generated.
